# EUROPEAN PATENT SPECIFICATION

(11) **EP 2 603 539 B1**
(45) Date of publication and mention of the grant of the patent: **02.01.2019**
(21) Application number: 11736374.7
(22) Date of filing: 27.07.2011
(51) Int. Cl.: C08G 18/50, C08G 18/78, C08G 18/79, C08G 18/72, C08G 18/10, C08J 11/04, C08G 18/38, C08J 5/04, C08G 18/32, C08G 18/83

(54) **METHOD FOR PREPARING A POLYCARBAMIDE RESIN**
VERFAHREN ZUR HERSTELLUNG EINES POLYCARBAMIDHARZES
PROCÉDÉ DE PRÉPARATION D'UNE RÉSINE POLYCARBAMIDE

(30) Priority: 10.08.2010 IT MI20101532
(43) Date of publication of application: 19.06.2013
(73) Proprietor: Ecopolimeri S.r.l., 42013 Casalgrande (RE) (IT)
(72) Inventor: DE NARDI, Domenico, I-20821 Meda (IT)
(74) Representative: Modiano, Micaela Nadia
(86) International application number: PCT/EP2011/062948
(87) International publication number: WO 2012/019916

(56) References cited:
- EP-A1- 0 039 156
- WO-A1-2008/076665
- WO-A2-2009/131935
- US-A- 3 435 003
- US-A1- 2010 266 764
- DATABASE WPI Week 200382 Thomson Scientific, London, GB; AN 2003-882384 XP002621545, -& JP 2003 183348 A (YOKOHAMA RUBBER CO LTD) 3 July 2003 (2003-07-03)

## Description

### Technical Field

The present invention relates to a method for preparing a polycarbamide resin, to a composite material comprising said resin and to the use of said material.

### Background art

Various types of unsaturated polyester resin are used in fields that range from the nautical sector to the building sector: said resins are used, for example, for the following purposes: in the nautical sector to cover the hull of watercraft and in the building sector with particular reference to the production of lightweight beams. Finally, said resins can be used to provide materials to be used in the industrial field, such as for example in the production of pipes for liquids of various kinds, tanks having various shapes and sizes.

The methods commonly used to produce resins entail the use of volatile components with substantial acute or chronic toxicity. In order to limit the exposure of operators it is necessary to apply protective measures to the work environment, such as suction systems or personal protection devices, which in addition to limiting the mobility of the operator and making work more difficult entail additional costs and can have a highly negative environmental impact.

Furthermore, the most commonly used unsaturated resins do not allow to perform the resin consolidation process in times that can be modulated as a function of the required application and do not allow to add easily, if necessary, the appropriate additives (e.g., with a flame-retardant and/or antifouling function) in the final manufactured article.

Another problem of the most commonly used resins is that the articles manufactured with said resins are unlikely to be recyclable at the end of their life, with consequent economic disadvantages and a high environmental impact.

WO2009131935 discloses coating compositions comprising a polvurea formed from a reaction mixture comprising: (a) a first component comprising an isocyanate, the first component having a viscosity of 2000 centipoise at a temperature7°C; and (b) a second component comprising an amine. Substrates coated at least in part with such a composition are also disclosed. Footwear coated at least in part with polyurea are also disclosed.

US Patent 3 435 003 discloses products having thermally reversible crosslinking, which comprise chains of saturated condensation polymer backbones bearing furan groups reacted with maleimides, useful as plastics and as adhesives and a method to make them.

### Disclosure of the invention

The aim of the present invention is to provide a method for the production of resins that does not entail the use of volatile components with substantial acute or chronic toxicity.

Another object of the present invention is to provide a method for preparing a resin whose consolidation time can be modulated as a function of the required application and to which it is possible to add easily additives of various kinds.

Another object of the present invention is to provide a composite material that can be used for the preparation of manufactured articles with various intended uses and with high mechanical performance, for example with an elasticity modulus on the order of 2000-3000 MPa and a tensile strength at break on the order of 35-55 MPa.

Another object of the present invention is to provide a process for recycling, at the end of their life, manufactured articles comprising at least one resin which is economically advantageous and can be applied easily on an industrial scale.

### Brief description of the Figure

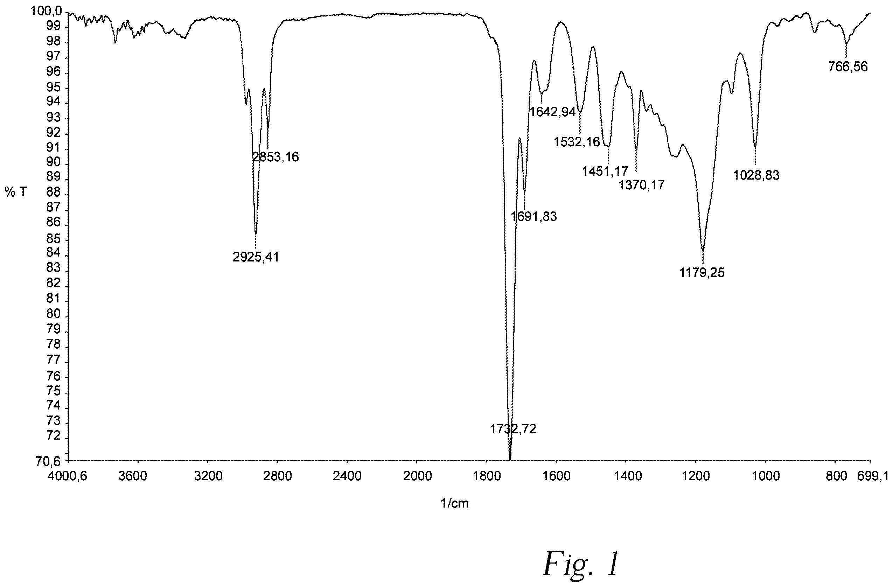

Figure 1: FT-ATR infrared spectrum of polycarbamide resin C.

### Ways of carrying out the invention

The aims mentioned above and other objects that will become better apparent hereinafter have been achieved by means of a method for obtaining a polycarbamide, comprising a reaction between a diamine compound A (reagent having the formula A) and a diisocyanate compound (reagent having the formula B) or dimers or trimers thereof, obtaining a polycarbamide resin of type C 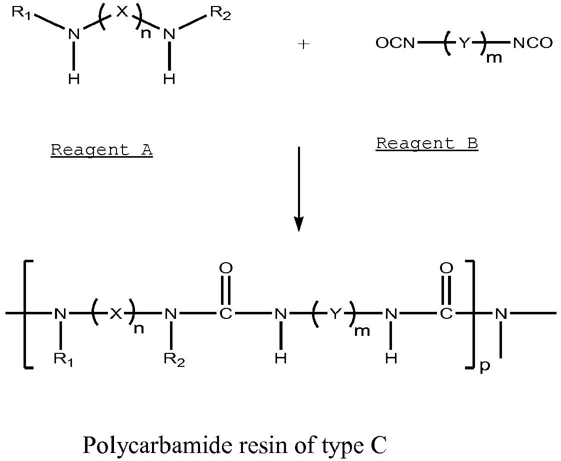 where
R₁, R₂ can be independently: H, alkyl group which is unsubstituted or substituted with heteroaromatic groups, aromatic group, alkyl or aromatic ester group, alkyl or aromatic ether group, siloxane group, typically furanic heteroaromatic group, with the condition that not both R₁ and R₂ are H;
X = linear or branched alkyl group, aromatic group; both can be optionally substituted with other amine functional groups;
Y = alkyl group, aromatic group;
m is an integer comprised between 2 and 20 inclusive;
n is an integer comprised between 2 and 20 inclusive;
m and n can be independently mutually identical or different;
P = depends on the degree of crosslinking established between 37 and 70% with respect to the reactive groups of isocyanate
the method furthermore comprising the addition of a nonvolatile coupling agent to the reaction mix that comprises the diamine compound A and the diisocyanate compound B or dimers or trimers thereof to obtain a polycarbamide resin D with a higher degree of crosslinking, wherein the nonvolatile coupling agent is a bisoxazolidine having the following formula (VIII) or formula (IX): 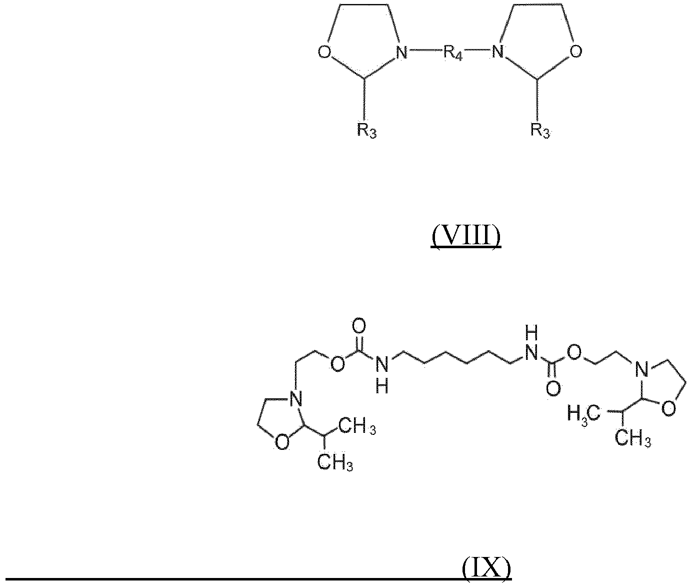 where:
R₃ is H, a linear or branched alkyl group, or an aromatic group, and
R₄ is a linear or branched alkyl group, an aromatic group, a poly-ester group, a poly-ether group, or a siloxane group.

It is possible to add to the formulation also pre-polymers which are a class of compounds usually constituted by polyols having the formula II or aliphatic polyethers ending with alcohol functional groups capable of reacting with the diisocyanate groups (III) prior to the forming of the resin itself. For example, in the case of the reaction between polyols and diisocyanates, it is given hereafter:

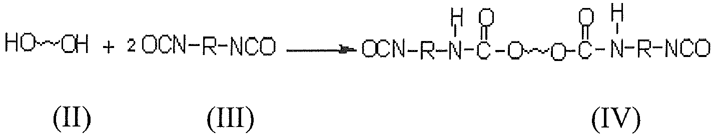

These prepolymers, prepared by reaction between the polyesters or polyols and an excess of diisocyanate, are then used in the forming of polycarbamide of type C by reaction between the free isocyanate groups and the amine compound A.

The aim and objects of the present invention are also achieved by means of a resin that can be obtained by virtue of said method.

Resins with polyureic and polyuretanic structures are commonly used in the coating industry for thin film applications.

In a preferred embodiment of the present invention, the process characteristics and the final properties of the product are modified by adding additives so as to control the polimerization rate and to broaden their usability to composite systems, particularly a long fibre, having high structural performances; said composites have intrinsic structural properties which are determined by the fiber filler, consolidated by the resin, which acts as an adhesive; said composites differ from the coatings, wherein the structural properties are provided by the substrate on which the thin film is applied.

In this preferred embodiment of the invention, the polyureic-based resin is modified in order to obtain the essential properties for the use in composites with fibers filler having high structural performances.

In the present invention, the application of the resin is focused on the production of a glass fibre composite, wherein the resin has a structural adhesive function and the required properties are charge adhesion and bulk properties, rather than surface properties as for the coating. The polymerization process for carrying out the manufactured article is three dimensional and with specific differences at the pure surface.

The aim and objects of the present invention are also achieved by means of a composite material, for example with a micrometric glass fibre filler, which is adapted to provide manufactured articles, comprising the resin, that can be obtained by means of said method with the addition of an inorganic filler, even a nanostructured one. In this way, the properties in the specific application of matrix for structural composite with fiber filler are modulated. In fact, in the case of long fiber composites, the polymeric matrix (i.e. the resin) is aimed at shaping the totality of the fibers, and the final composite has the final fiber properties under a macroscopic view.

The aim and object of the present invention are also achieved by means of a method for recycling said manufactured article at the end of its life.

The term "comprising" means "included" in addition to "constituted"; for example, a composition "comprising" X can be constituted exclusively by X or can include other additional components, for example X + Y.

Within the scope of the present invention, the expression "polycarbamide resin" indicates a polymer that comprises urea units and X and Y units as defined above.

Within the scope of the present invention, the expression "alkyl group" indicates a linear or branched chain of saturated aliphatic C1-C20 hydrocarbons.

The aromatic residues that can be used in the present invention are based on the structure of toluene, of diphenylmethane appropriately substituted with isocyanate or amine groups and by other electron-attracting or electron-donating groups, such as for example
-NO₂ and -OCH₃.

The heteroaromatic groups that can be used in the present invention comprise pyridines, thiophenes and furans, but are more typically furans.
The siloxane derivatives that can be used in the present invention have the general formula (I): 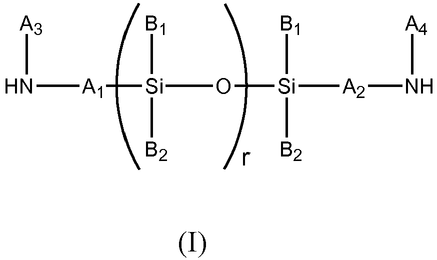
where A₁-A₄ and B₁-B₄ are independently alkyl groups constituted by 1 to 10 carbon atoms or aromatic or polyaromatic groups,
and r is an integer comprised between 1 and 1000.

Within the scope of the present invention, the expressions "inorganic filler" and "inorganic fibers" designate a material that is not chemically reactive with respect to the resin and in an appropriate physical form, for example as fiber or powder, preferably of micrometric dimensions, and can be added to the resin to give desired properties, preferably in at least in amounts of 30% by weight, and up to 70% by weight. Non-limiting examples of these materials are glass fibers, basalt fibers, carbon fibers or inorganic powders, such as aluminum oxide or silicon carbide.

Within the scope of the present invention, the expression "nanostructured inorganic compound" is used to reference an inorganic material in which at least one of the dimensions is on the order of nanometers. Typical nanostructured inorganic materials used in the scope of the present invention are for example phyllosilicates of natural origin, such as montmorillonite and/or bentonite, optionally even rendered organophilic by modification with organic additives.

An aspect of the present invention relates to a method for obtaining a polycarbamide comprising the reaction between a diamine compound A (reagent A) and a diisocyanate compound (reagent B) or dimers or trimers thereof 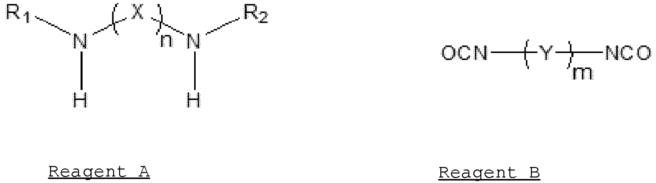 where
R₁, R₂ can be independently: H, alkyl group which is unsubstituted or substituted with heteroaromatic groups, aromatic group, alkyl or aromatic ester group, alkyl or aromatic ether group, siloxane group, heteroaromatic and typically furanic group, with the condition that not both R₁ and R₂ are H;
X = linear or branched alkyl group, aromatic group; both can be optionally substituted with other amine functional groups;
Y = alkyl group, aromatic group;
m = comprised between 2 and 20 inclusive;
n = comprised between 2 and 20 inclusive;
m and n can be independently mutually identical or different
the method furthermore comprising the addition of a nonvolatile coupling agent to the reaction mix that comprises the diamine compound A and the diisocyanate compound B or dimers or trimers thereof to obtain a polycarbamide resin D with a higher degree of crosslinking, wherein the nonvolatile coupling agent is a bisoxazolidine having the following formula (VIII) or formula (IX): 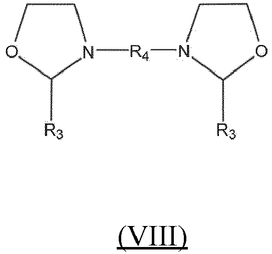 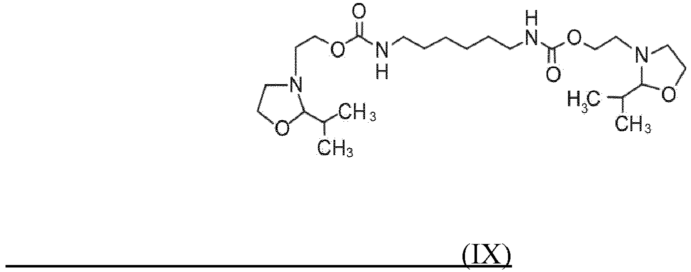 where:
R₃ is H, a linear or branched alkvl group, or an aromatic group, and
R₄ is a linear or branched alkyl group, an aromatic group, a poly-ester group, a poly-ether group, or a siloxane group

The resin obtainable by means of this method is capable of producing a final network starting from macromonomers or reactive molecules with a molecular weight of more than 500 units of atomic mass and with reactive groups that allow the forming of the final product by means of a staged polyaddition mechanism. Typically, said process uses diisocyanates or polyisocyanates or mixtures of di- and polyisocyanates and di- or polyamines or mixtures of di- and polyamines so as to obtain polycarbamides.

In the reactions described in the background art, the reaction of addition between isocyanates and amines occurs with very rapid kinetics, on the order of a few seconds. However, depending on the type of application required, it would be sometimes preferable to increase the consolidation time of the resin itself. It has been found, advantageously, that by using secondary amines, which react more slowly with the isocyanates, it is possible to achieve better control over the crosslinking time and it is possible to modulate the duration of the resin consolidation process as a function of the required use, furthermore allowing the controlled addition of additives and/or inorganic fillers.

Preferably, in the method according to the invention the diamine compound A is an ester derivative of aspartic acid having the formula (V) 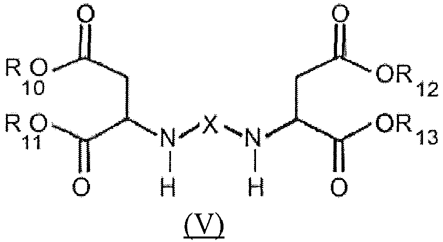 where X is a linear, branched or cyclic alkyl group or an aromatic group and both can be optionally substituted with other amine functional groups. Preferably, X is a linear alkyl group constituted typically by 6 methylene groups or by the methylene-cyclohexane group having the formula (VI):

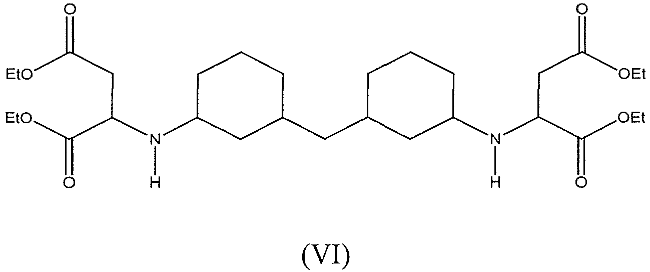

The groups R₁₀ to R₁₃ can be mutually identical or mutually different and are selected among aliphatic groups. Preferably, the groups R₁₀ to R₁₃ are of an alkyl type which is linear or branched in beta position with respect to the oxygen of the ester group; more preferably, R₁₀ to R₁₃ are ethyl groups (Formula VI).

The use of derivatives of aspartic acid with groups X of different nature allows to modulate the drying time of the polycarbamide, allowing the application of this formulation to the obtainment of manufactured articles adapted for various applications.

As an alternative, it is also possible to use commercially available aliphatic amines, preferably with very low volatility (boiling point at atmospheric pressure higher than 250°C), with the general formula (VII), with n comprised between 1 and 3, R₁ and R₂ independently equal to H, methyl, ethyl, isopropyl or other linear or branched aliphatic groups comprising 3 to 8 carbon atoms.

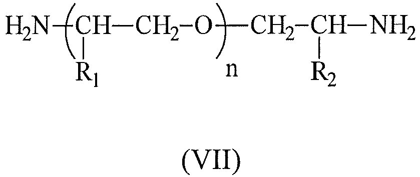

As regards the isocyanate component, the use of aliphatic compounds is to be preferred because they are more stable to photooxidation than the corresponding aromatic isocyanates.

In a preferred embodiment, the diisocyanate compound B is selected among 1,6-hexamethylene diisocyanate (HDI), 1-isocyanate-3-isocyanatemethyl-3,5,5-trimethylcyclohexane (isophorone diisocyanate, IPDI), diphenyl-dimethyl-diisocyanate (MDI), and 4,4'-diisocyanate dicyclohexylmethane (H₁₂MDI).

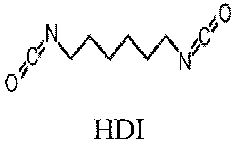

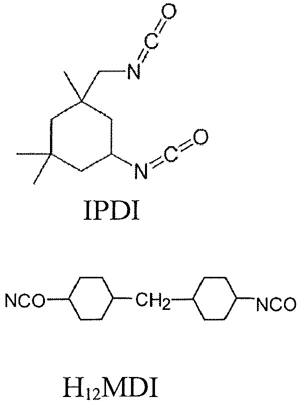

However, it is preferable to use dimers and trimers of the diisocyanates shown earlier, because they have the characteristic of being less volatile and therefore less toxic than the corresponding monomers. Some examples of aliphatic polyisocyanates based on 1,6-hexamethylene diisocyanate (HDI) are: 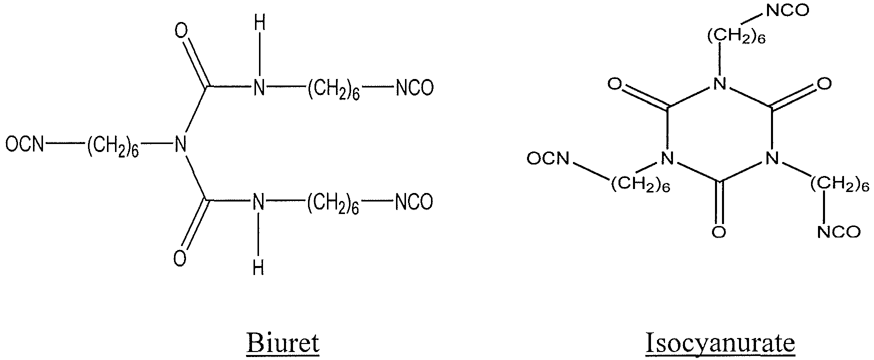 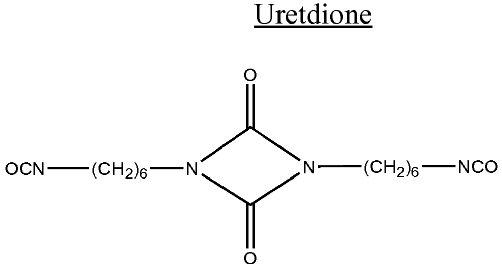 The polycarbamide resin of type C is modulated further in its structure and molecular weight and optionally reinforced by means of a post-reaction process, in which adapted nonvolatile coupling agents, characterized by the presence of functional groups that are reactive with those of the primary resin, increase the network of the final product, allowing to increase the distortion temperature (HDT) of the final manufactured article at temperatures of 75 °C or more.

The method according to the invention comprises the addition, to the reaction mix constituted by the reagents A and B, of a nonvolatile coupling agent in order to obtain a polycarbamide resin with a higher degree of cross-linking (polycarbamide resin D).

This agent is usually added as an additive to the isocyanate component prior to the forming of the resin and can belong to the class of bisoxazolidines. These bisoxazolidines, which are able to produce amino derivatives only in the presence of water, can be used to control the polymerization rate, with partial or total diamine substitution.

Said nonvolatile coupling agent is a bisoxazolidine having the formula (VIII) or (IX), where: R₃ = H, linear or branched alkyl group, aromatic group; R₄ = linear or branched alkyl group, aromatic group, poly-ester group, poly-ether group, siloxane group, urethane group or carbon group.

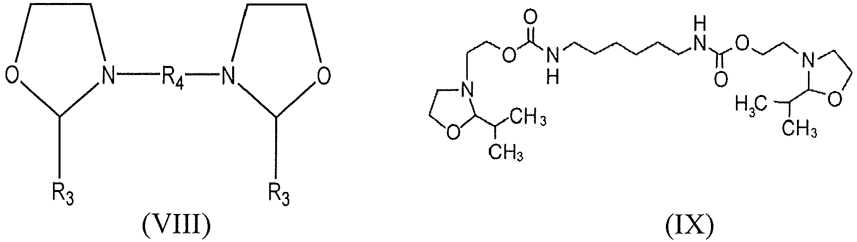

These molecules, by hydrolyzing for example by virtue of the action of atmospheric humidity, generate alkoxyamines. The amine groups and the hydroxyl groups thus formed can then react with amine and/or isocyanate groups that have remained free during staged polycondensation, leading to an increase in the network density of the final resin. 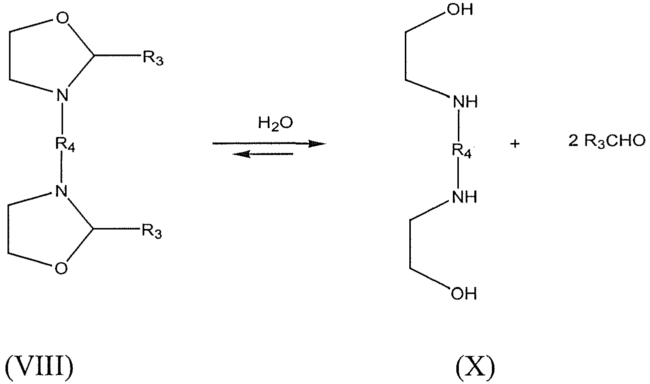 More preferably, according to the method of the present invention, the bisoxazolidine of formula VIII can be added in a range of 10-20%/weight diamine to control the polymerization rate and the degree of crosslinking.
Also, according to the method of the present invention, the non-volatile coupling agent, bisazolidine of formula VIII, can substitute the diamine A in a percentage higher than 50% and the crosslinking is completed with a vapor water-based treatment.

It is also possible to use crosslinking agents that can react reversibly with adapted functional groups that are present on the main resin, so as to provide the possibility to reduce the molecular weight at the end of the life of the article, which can thus be disposed and/or recycled more easily. For this purpose it is possible for example to add to the formulation a bismaleimide derivative having the formula (XI) 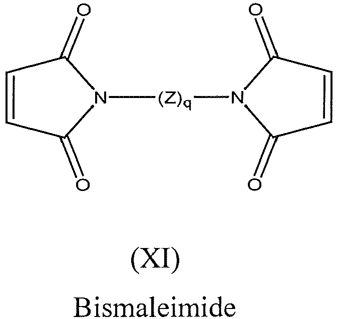 which, by means of a Diels-Alder reaction with suitable dienes present in the main resin, can increase the polymeric network. Since the Diels-Alder reaction is heat-reversible, at the end of the life of the manufactured article it is possible to destroy the network that has been formed by means of the bismaleimide derivative, thus allowing to lower the molecular weight of the polycarbamide. The polycarbamides can then be recycled partially or totally by depolymerization according to methods presented in the literature, an aspect which is particularly important in many sectors, particularly in the nautical one, where non-recyclable phenolic resins are currently used (Ref. WO2008014988 A1; WO2008022713 A1; Noritake, A.; Shigematsu, M.; Tsujii, T.; Tanahashi, M. "Recycling of polyurethane using high-pressure steam treatment", Transactions of the Materials Research Society of Japan Vol. 32 No. 3 p. 705-708, 2007**;** Taniguchi, T.; Sato, N.; Matsushita, M.; Takahashi, H.; Suzuki, T.; Hoshino, Y.; Abe, N. "Hydrolysis of polyurethane resin using a twin screw reactive extruder for recycle," Kobunshi Ronbunshu, Vol. 56, No. 11, p. 709-716, 1999; Kresta, J. E.; Xiao, H. X.; Suthar, B.; Li, X. H.; Sun, S. P.; Klempner, D. "New approach to recycling of thermosets", Macromolecular Symposia, Vol. 135, Ed. 38a, Microsymposium on Recycling of Polymers, 1997, p., 25-33, Journal 1998; EP838492 A2; DE19519333; DE4427250 A1; EP 682063 A1; EP 610719 A2; DE4217524 A1; EP 442435 A2).

Preferably, the method according to the invention furthermore comprises the treatment of the polycarbamide resin D with a crosslinking agent to obtain a crosslinked polycarbamide resin (polycarbamide resin E) or the treatment of the polycarbamide resin C with a cross-linking agent to obtain a crosslinked polycarbamide resin (polycarbamide resin El). More preferably, in said resin at least one between R₁ and R₂ is an alkyl group that is substituted at least once with a ring selected among furan, pyrrole, thiophene and cyclopentadiene and the cross-linking agent is a derivative of bismaleimide having the following formula (XI): 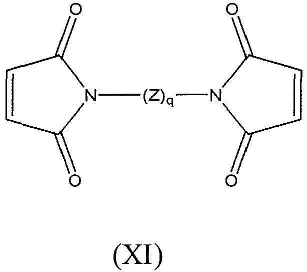 where Z is a linear or branched alkyl group or an aromatic group, in any case optionally substituted (polycarbamide resin F), and q is an integer comprised between 2 and 20.

More preferably, in said method at least one between R₁ and R₂ is an alkyl group which is substituted at least once with a furan ring.

An example of crosslinking process is described in the following diagram 1: 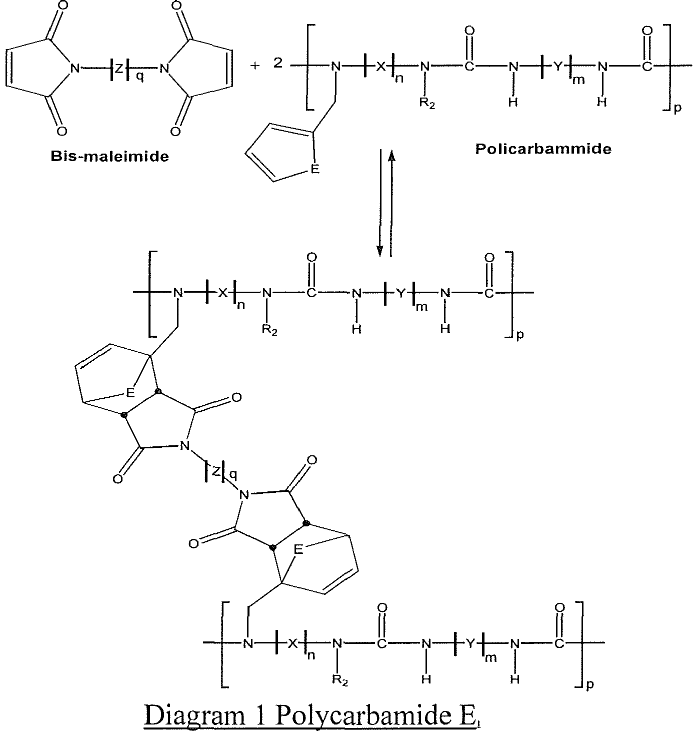 where: X, Y, m and n are the same given for compounds A and B; p depends on the degree of crosslinking, which varies in the range from 37 to 70% with respect to the reactive groups of isocyanate, Z is a linear or branched alkyl group or an aromatic group, and both can be optionally substituted; E is carbon or a heteroatom of various nature but preferably oxygen.

Polycarbamide resin C has intrinsic antifouling properties and therefore the addition of specific antifouling agents in the formulation is not necessary.

In order to give advantageous properties to the manufactured articles that comprise the resins of the present invention, during the process for their preparation it is furthermore possible to add additives for example with flame-retardant properties. Preferably, the method according to the present invention comprises the addition, to one of the polycarbamide resins C, D, E, E1 or F, of a flame-retardant agent. More preferably, in said method the flame-retardant compound is at least one nanostructured inorganic compound (typically montmorillonite and/or organophilic bentonite) or an alkyl or aromatic phosphonate (formula (XIII)) characterized by the presence of functional groups that are reactive with those of the primary resin so as to avoid the loss of flame-retardant properties due to the release of said phosphonates. 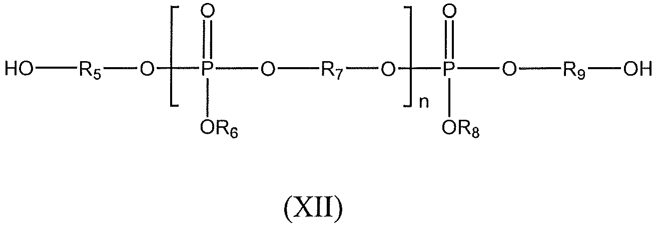 where R₅-R₉ can be independently: H, a linear or branched alkyl group, or an aromatic group, and n = an integer that can vary from 1 to 10.

In a further aspect, the present invention relates to a composite material that comprises said resin and an inorganic filler selected among basalt fibers, glass fibers, carbon fibers or mixtures thereof to provide materials with high mechanical performance, having for example an elasticity modulus on the order of 2000-3000 MPa and a tensile strength at break on the order of 35-55 MPa. For this purpose it is possible, for example, to use a filler constituted by an inorganic or organic material in the form of a fiber with a high shape ratio. Preferably, said shape ratio must be comprised between 50 and 1000. Preferably, said fibers of inorganic or organic material are pre-impregnated with the coupling agent (Reagent A or Reagent B) so as to facilitate the forming of a polymeric network around said fibers. Preferably, said composite material comprises polycarbamide resin F.

In another aspect, the present invention relates to a method for preparing said composite material that comprises the addition of said filler to the resin or the addition of the resin to the filler, in the step for the consolidation of said resin.

In another aspect, the present invention relates to the use of said composite material to provide manufactured articles. Preferably, the composite material used to provide said manufactured articles comprises polycarbamide resin F: preferably, the composite material according to the invention is used to produce manufactured articles for the nautical sector and in particular for covering the hull of watercraft; in the building sector with particular reference to lightweight beams, in transportation, for example in the construction of body parts for cars and trains, or in the production of small manufactured articles for series such as for example car mirrors, motorcycle fairings, truck spoilers. Finally, we propose the use of the materials to which the present patent relates in the industrial field, such as for example for the provision of pipes for liquids of various kinds, tanks of various shapes and size.

Another aspect of the present invention relates to a method for recycling, at the end of their life, said manufactured articles comprising the resin F by depolymerization. Said method can be performed advantageously by means of the reaction known as "reverse Diels-Alder", which allows to separate the original components of the Diels-Alder reaction (diene and maleimide in the case of resin F) by exposure to moderately high temperatures comprised between 140 and 260 °C. Depolymerization can occur, therefore, by simple thermal treatment of the manufactured article comprising the polycarbamide resin F according to the invention. This aspect allows recycling of the manufactured article for further uses as an alternative to disposal, with consequent economic and environmental advantages.

The following examples illustrate some embodiments of the invention without however intending to limit its scope.

### COMPARATIVE EXAMPLE 1:

100 parts by weight of diamine having the formula (VII), 65 parts by weight of polyisocyanate constituted by an equal-weight mixture of Biuret, isocyanurate and Uretdione (mentioned above) were mixed with a mechanical agitator at ambient temperature for approximately 1 minute. By applying this procedure, complete homogeneity of the mixture is ensured. Crosslinking occurs in 24 hours at ambient temperature on a glass medium and produces polycarbamide resin C, which exhibits the FT-ATR infrared spectrum show in Figure 1.

### EXAMPLE 2:

Like Example 1, with the addition, by slow mixing for 1 minute, in the isocyanate component, of 5% of derivatives of bisoxazolidine having the formula (IX).

### EXAMPLE 2bis

Like Example 1, with the addition, by slow mixing for 1 minute, in the isocyanate component, of 20% of derivatives of bisoxazolidine having the formula (IX), which differ only for the concentration of the reactant IX.

### EXAMPLE 3:

Like Example 1 or Example 2, with the addition of organophilic phyllosilicate flame retardant or suppressant of the montmorillonite type, added together with the amine component comprised between 1 and 10%.

### EXAMPLE 4:

This relates to panel 1 and panel 2 described hereinafter.

Panel 1: a panel made of composite material, obtained by depositing successive layers of polycarbamide resin D obtained in Example 2 and fiber with meshes by means of the following procedure:
A layer of polycarbamide resin D with a thickness of approximately 1 mm was applied on a base of inert material covered by a film of PVC or LDPE with a releasing effect,. A layer of glass fiber known as Mat 450, constituted by glass fabric with fibers arranged in a non-prearranged manner, also known as random-type fabric, was applied on this layer without treating the surface with further additives (primer). Then a new layer of polycarbamide resin D was deposited and compressed with an adapted tool in order to remove any residual air bubbles.

A second layer of glass fiber of the random type was applied with the same method. A new layer of polycarbamide resin D was used as a binder for the applied fibers. A type of fabric with ordered and crossed meshes, of the type of BAX 800, was applied to the panel thus obtained, again without primer. This material is known as "fiber in powder form". Again to bond the glass fibers, polycarbamide resin D was deposited and any air bubbles were eliminated.

A last layer of random fiber, covered by a layer of polycarbamide resin D, allows to obtain the final panel.

### Summary of the manufacturing sequence:

- 1 layer of 1-mm polycarbamide resin
- 1 layer of MAT 450 glass fiber of the random type, non-primed
- 1 layer of 1-mm polycarbamide resin
- 1 layer of MAT 450 glass fiber of the random type, non-primed
- 1 BIAX 800 crossed glass fiber without primer or in powder form
- 1 layer of 1-mm polycarbamide resin
- 1 layer of MAT 450 glass fiber of the random type, non-primed
- 1 layer of polycarbamide resin

### Panel 2

### Summary of the construction sequence

- 1 layer of 1-mm polycarbamide resin
- 1 layer of MAT 300 glass fiber of the random type, non-primed
- 1 layer of 1-mm polycarbamide resin
- 1 layer of MAT 450 glass fiber of the random type, non-primed
- 1 layer of 1-mm polycarbamide resin
- 1 layer of MAT 450 glass fiber of the random type, non-primed
- 1 layer of polycarbamide resin
- 1 layer of MAT 450 glass fiber of the random type, non-primed
- 1 layer of 1-mm polycarbamide resin
- 1 layer of MAT 450 glass fiber of the random type, non-primed
- 1 layer of 1-mm polycarbamide resin
- 1 layer of MAT 450 glass fiber of the random type, non-primed
- 1 layer of 1-mm polycarbamide resin
- 1 layer of MAT 450 glass fiber of the random type, non-primed
- 1 layer of 1-mm polycarbamide resin

For each panel, the percentage of glass reinforcement indicated in Table 1 was measured. Moreover, tests were conducted for each panel in order to determine the elasticity modulus and the tensile strength at break according to the UNI EN ISO 61 standard and flexural strength according to the UNI EN ISO 14125 standard. In the case of panel 1, six specimens were taken for the traction tests and six specimens were taken for the flexural tests. In both cases, three specimens were taken along a main direction, designated by the reference letter T, and three specimens were taken along a direction which is perpendicular to the preceding one and is designated by the reference letter L.

In the case of panel 2, three specimens were taken only along the main direction (T) both for the traction tests and for the flexural tests. The resulting average values are given in Table 1.

**Table 1. Percentage of glass reinforcement, tensile elasticity modulus (Et), tensile strength at break (Rt), flexural elasticity modulus (Ef) and flexural strength at break (Rf) for panels 1 and 2.**

| Panel | Glass reinforcement (%) | Direction of specimen taking | Traction | | Flexing | |
|---|---|---|---|---|---|---|
| | | | Rt (MPa) | Et (MPa) | Rf (MPa) | Ef (MPa) |
| 1 | 25.7 | T | 57 | 5337 | 112 | 4033 |
| 1 | | L | 64 | 5777 | 117 | 3632 |
| 2 | 30.2 | T | 84 | 5810 | 111 | 4380 |

The results given in Table 1 demonstrate that the panels obtained according to the invention have excellent mechanical properties both for traction and for flexing.

## Claims

1. A method for obtaining a polycarbamide resin, comprising a reaction between a diamine compound having the formula A and a diisocyanate compound having the formula B or dimers or trimers thereof, obtaining the polycarbamide resin of type C 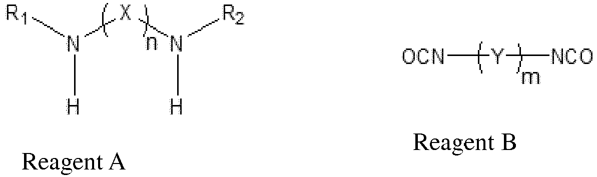 where
R₁ and R₂ can be independently H, an alkyl group which is unsubstituted or substituted with heteroaromatic groups, an aromatic group, an alkyl or aromatic ester, an alkyl or aromatic ether, siloxane groups, heteroaromatic groups, with the condition that not both R₁ and R₂ are H;
X is a linear or branched alkyl group or an aromatic group, optionally substituted with amine functional groups;
Y is an alkyl group or an aromatic group; and m and n are independently an integer comprised between 2 and 20,
the method furthermore comprising the addition of a nonvolatile coupling agent to the reaction mix that comprises the diamine compound A and the diisocyanate compound B or dimers or trimers thereof to obtain a polycarbamide resin D with a higher degree of crosslinking, wherein the nonvolatile coupling agent is a bisoxazolidine having the following formula (VIII) or formula (IX): 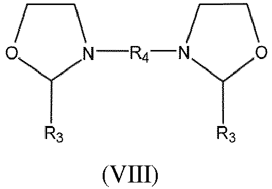 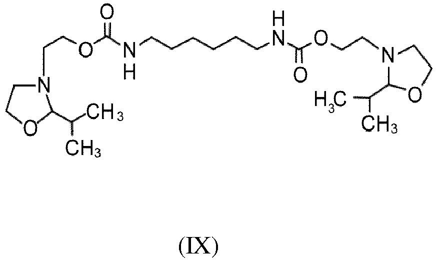 where:
R₃ is H, a linear or branched alkyl group, or an aromatic group, and
R₄ is a linear or branched alkyl group, an aromatic group, a poly-ester group, a poly-ether group, or a siloxane group.

2. The method according to claim 1, wherein at least one between R₁ and R₂ is - CH₂-furanyl.

3. The method according to claim 1 or 2, wherein the diamine compound A has the following formula (V); 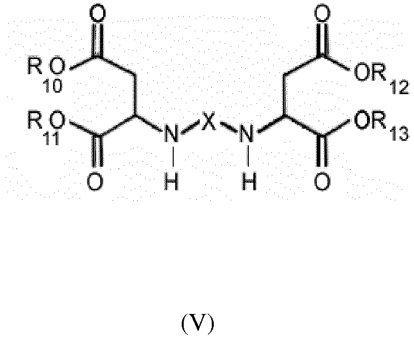 where:
X is a linear, branched or cyclic alkyl group or an aromatic group, optionally substituted with amine functional groups; R₁₀-R₁₃, which are mutually identical or different, are selected independently among linear, cyclic or branched aliphatic groups.

4. The method according to claim 3, wherein R₁₀-R₁₃ are independently a linear or branched alkyl group in beta position with respect to the oxygen of the ester group.

5. The method according to one of claims 1-4, wherein the diisocyanate compound B is selected among 1,6-hexamethylene diisocyanate (HDI), 1'1-isocyanate-3-isocyanatemethyl-3,5,5-trimethyl cyclohexane (isophorone diisocyanate, IPDI), diphenyl-dimethyl-diisocyanate (MDI), and dicyclohexylmethane-4,4'-diisocyanate (H₁₂MDI).

6. The method according to claim 5, wherein the compound B is selected among dimers and trimers of HDI, IPDI, MDI or H₁₂MDI.

7. The method according to claim 6, wherein the compound B is Biuret or isocyanurate.

8. The method according to claim 1, furthermore comprising the treatment of the resin D with a crosslinking agent to obtain a crosslinked polycarbamide resin E.

9. The method according to claim 2, wherein at least one between R₁ and R₂ is an alkyl group which is substituted at least once with a ring selected among furan, pyrrole, thiophene and cyclopentadiene and the crosslinking agent is a derivative of bismaleimide having the following formula (XI): 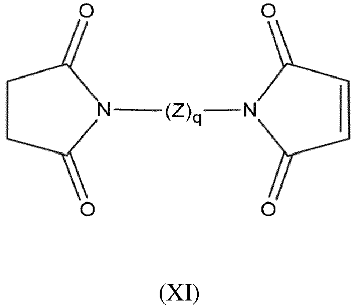 wherein Z is a linear or branched alkyl group or an aromatic group, at any occurence optionally substituted, and q is a number comprised between 2 and 20, obtaining a polycarbamide resin F.

10. The method according to claims 2 and 9, wherein at least one between R₁ and R₂ is an alkyl group substituted at least once with a furan ring.

11. The method according to one of the preceding claims, furthermore comprising the addition of a flame retardant to one of resins D, E, E1 or F.

12. The method according to claim 11, wherein the flame retardant compound is selected among a nanostructured inorganic compounds.

13. The method according to claim 11, wherein the flame retardant compound is an alkyl or aromatic phosphonate having the following formula (XII): 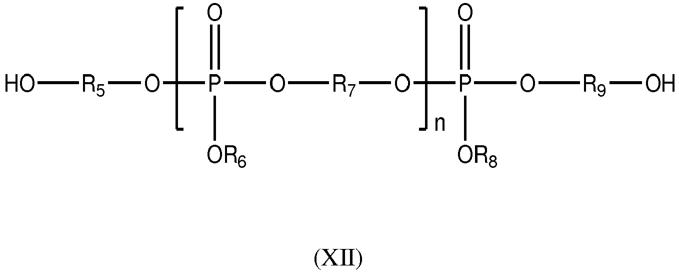 where R₅-R₉ can be independently H, a linear or branched alkyl group, an aromatic group, and n is a number from 1 to 10.

14. A polycarbamide resin obtainable according to one of the preceding claims.

15. A composite material comprising a polycarbamide resin according to claim 14 and an inorganic filler selected among basalt fibers, glass fibers, carbon fibers and mixtures thereof.

16. The composite material according to claim 15, comprising the polycarbamide resin prepared according to the method of claim 9.

17. A method for preparing the composite material according to claim 16, comprising the addition of the filler to the polycarbamide resin or the addition of the polycarbamide resin to the filler during the step of consolidation of said resin.

18. The use of the material according to claim 16 to provide manufactured articles.

19. The use of the material according to claim 17 to manufacture articles.

20. The use according to claim 18 or 20, wherein said articles are articles for the nautical sector.

21. A method for recycling, at the end of its life, an article according to claim 17, comprising the depolymerization of the polycarbamide resin.

22. The method according to claim 6, wherein the bisoxazolidine of formula VIII is added in an amount of 10-20% by weight referred to the diamine A.

23. The method according to claim 6,
wherein the non-volatile coupling agent, bisoxazolidine of formula VIII, substitutes the diamine A in a percentage higher than 50% and
wherein the crosslinking is completed with a vapor water-based treatment.

## Patentansprüche

1. Ein Verfahren zum Erhalten eines Polycarbamidharzes, umfassend eine Reaktion zwischen einer Diaminverbindung mit der Formel A und einer Diisocyanatverbindung mit der Formel B oder Dimeren oder Trimeren davon, Erhalten des Polycarbamidharzes vom Typ C 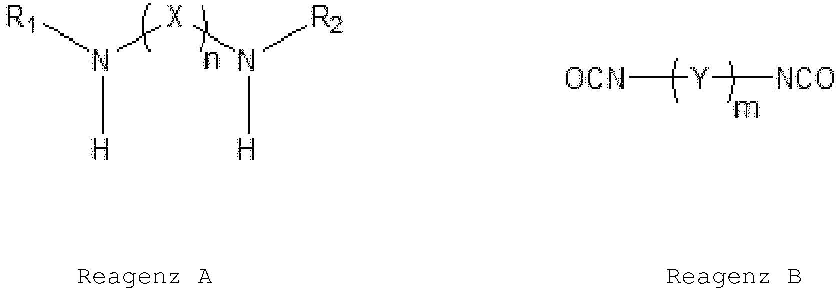 worin
R₁ und R₂ unabhängig H, eine Alkylgruppe, welche unsubstituiert oder substituiert ist mit heteroaromatischen Gruppen, eine aromatische Gruppe, ein Alkyl- oder aromatischer Ester, ein Alkyl- oder aromatischer Ether, Siloxangruppen, heteroaromatische Gruppen sein können, mit der Voraussetzung, dass nicht beide R₁ und R₂ H sind;
X ist eine lineare oder verzweigte Alkylgruppe oder eine aromatische Gruppe, wahlweise substituiert mit funktionellen Amingruppen;
Y ist eine Alkylgruppe oder eine aromatische Gruppe; und m und n sind unabhängig eine ganze Zahl zwischen 2 und 20,
wobei das Verfahren weiter die Zugabe eines nichtvolatilen Kopplungsmittels zu der Reaktionsmischung umfasst, welche die Diaminverbindung A und die Diisocyanatverbindung B oder Dimere oder Trimere davon umfasst, um ein Polycarbamidharz D mit einem höheren Grad an Quervernetzung zu erhalten, worin das nichtvolatile Kopplungsmittel ein Bisoxazolidin mit der folgenden Formel (VIII) oder Formel (IX) ist: 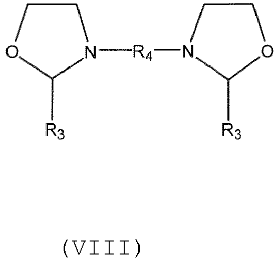 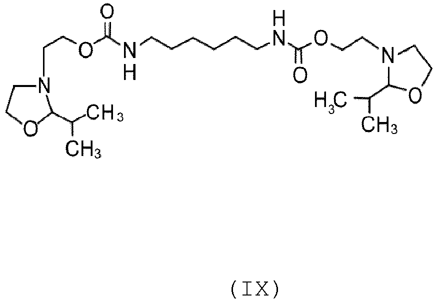 worin:
R₃ H, eine lineare oder verzweigte Alkylgruppe, oder eine aromatische Gruppe ist, und
R₄ ist eine lineare oder verzweigte Alkylgruppe, eine aromatische Gruppe, eine Polyestergruppe, eine Polyethergruppe oder eine Siloxangruppe.

2. Das Verfahren gemäß Anspruch 1, worin mindestens eines zwischen R₁ und R₂ -CH₂-Furanyl ist.

3. Das Verfahren gemäß Anspruch 1 oder 2, worin die Diaminverbindung A die folgende Formel (V) hat; 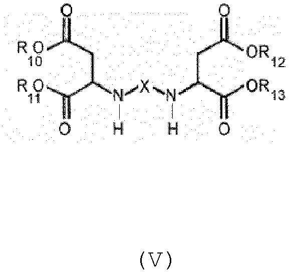 worin
X eine lineare, verzweigte oder zyklische Alkylgruppe oder eine aromatische Gruppe ist, wahlweise substituiert mit funktionellen Amingruppen; R₁₀-R₁₃, welche untereinander identisch oder unterschiedlich sind, sind unabhängig gewählt aus linearen, zyklischen oder verzweigten aliphatischen Gruppen.

4. Das Verfahren gemäß Anspruch 3, worin R₁₀-R₁₃ unabhängig eine lineare oder verzweigte Alkylgruppe in Beta-Position in Bezug auf den Sauerstoff der Estergruppe sind.

5. Das Verfahren gemäß einem der Ansprüche 1-4, worin die Diisocyanatverbindung B gewählt ist aus 1,6-Hexamethylendiisocyanat (HDI), 1'1-Isocyanat-3-isocyanatmethyl-3,5,5-trimethylcyclohexan (Isophorondiisocyanat, IPDI), Diphenyl-dimethyl-diisocyanat (MDI), und Dicyclohexylmethan-4,4'-diisocyanat (H₁₂MDI).

6. Das Verfahren gemäß Anspruch 5, worin die Verbindung B gewählt ist aus Dimeren und Trimeren von HDI, IPDI, MDI oder H₁₂MDI.

7. Das Verfahren gemäß Anspruch 6, worin die Verbindung B Biuret oder Isocyanurat ist.

8. Das Verfahren gemäß Anspruch 1, weiter umfassend die Behandlung des Harzes D mit einem quervernetzenden Mittel, um ein quervernetztes Polycarbamidharz E zu erhalten.

9. Das Verfahren gemäß Anspruch 2, worin mindestens eines zwischen R₁ und R₂ eine Alkylgruppe ist, welche mindestens einmal substituiert ist mit einem Ring gewählt aus Furan, Pyrrol, Thiophen und Cyclopentadien, und das quervernetzende Mittel ist ein Derivat von Bismaleimid mit der folgenden Formel (XI): 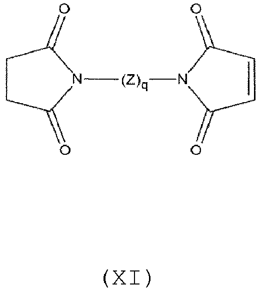 worin Z eine lineare oder verzweigte Alkylgruppe oder eine aromatische Gruppe ist, bei jedem Vorkommen wahlweise substituiert, und q ist eine Zahl zwischen 2 und 20, wobei ein Polycarbamidharz F erhalten wird.

10. Das Verfahren gemäß Ansprüchen 2 und 9, worin mindestens eines zwischen R₁ und R₂ eine Alkylgruppe ist, die mindestens einmal mit einem Furanring substituiert ist.

11. Das Verfahren gemäß einem der vorhergehenden Ansprüche, weiter umfassend die Zugabe eines flammenhemmenden Wirkstoffs zu einem der Harze D, E, E1 oder F.

12. Das Verfahren gemäß Anspruch 11, worin die flammenhemmende Verbindung gewählt ist aus nanostrukturierten anorganischen Verbindungen.

13. Das Verfahren gemäß Anspruch 11, worin die flammenhemmende Verbindung ein Alkyl- oder aromatisches Phosphonat ist mit der folgenden Formel (XII): 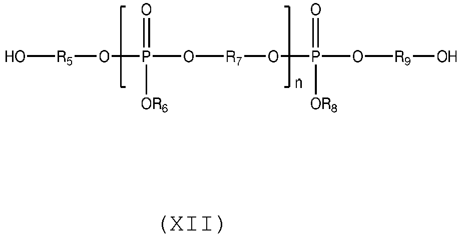 worin R₅-R₉ unabhängig H, eine lineare oder verzweigte Alkylgruppe, eine aromatische Gruppe sein können, und n ist eine Zahl von 1 bis 10.

14. Ein Polycarbamidharz erhältlich gemäß einem der vorhergehenden Ansprüche.

15. Ein Verbundmaterial umfassend ein Polycarbamidharz gemäß Anspruch 14 und einen anorganischen Füllstoff gewählt aus Basaltfasern, Glasfasern, Kohlenstofffasern und Mischungen daraus.

16. Das Verbundmaterial gemäß Anspruch 15, umfassend das Polycarbamidharz hergestellt gemäß dem Verfahren von Anspruch 9.

17. Ein Verfahren zur Herstellung des Verbundmaterials gemäß Anspruch 16, umfassend die Zugabe des Füllstoffs zu dem Polycarbamidharz oder die Zugabe des Polycarbamidharzes zu dem Füllstoff während dem Schritt Erstarren des genannten Harzes.

18. Die Verwendung des Materials gemäß Anspruch 16, um Fertigprodukte bereitzustellen.

19. Die Verwendung des Materials gemäß Anspruch 17 für Fertigprodukte.

20. Die Verwendung gemäß Anspruch 18 oder 20, worin die genannten Artikel Artikel für den nautischen Sektor sind.

21. Ein Verfahren zum Recyceln eines Artikels gemäß Anspruch 17, nach Ablauf seiner Nutzungsdauer, umfassend die Depolymerisation des Polycarbamidharzes.

22. Das Verfahren gemäß Anspruch 6, worin das Bisoxazolidin der Formel VIII in einer Menge von 10-20 Gewichts% bezogen auf das Diamin A hinzugefügt wird.

23. Das Verfahren gemäß Anspruch 6, worin das nichtvolatile Kopplungsmittel, Bisoxazolidin der Formel VIII, das Diamin A in einem Prozentsatz von größer als 50% substituiert, und worin die Quervernetzung mit einer Dampf Wasser -basierten Behandlung vervollständigt wird.

## Revendications

1. Procédé en vue d'obtenir une résine de polyurée, qui comprend le fait de faire réagir un composé diamine répondant à la formule A et un composé diisocyanate répondant à la formule B 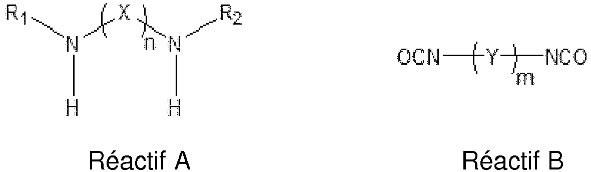 dans lesquelles formules
- R₁ et R₂ peuvent représenter, indépendamment, un atome d'hydrogène, un groupe alkyle dépourvu de substituant ou porteur de groupes hétéroaromatiques à titre de substituants, un groupe aromatique, un groupe ester aromatique ou ester d'alkyle, un groupe éther aromatique ou éther d'alkyle, un groupe siloxane ou un groupe hétéroaromatique, sous réserve que R₁ et R₂ ne représentent pas tous les deux un atome d'hydrogène,
- X représente un groupe alkyle linéaire ou ramifié ou un groupe aromatique, en option porteur de groupes fonctionnels amine à titre de substituants,
- Y représente un groupe alkyle ou un groupe aromatique,
- et les indices m et n sont, indépendamment, un nombre entier valant de 2 à 20,
ou des dimères ou trimères de tels composés, ce qui donne une résine de polyurée de type C,
le procédé comprenant en outre le fait d'introduire un agent de couplage non-volatil dans le mélange réactionnel qui contient le composé A diamine et le composé B diisocyanate, ou des dimères ou trimères de tels composés, de manière à obtenir une résine D de polyurée dotée d'un degré de réticulation plus élevé, l'agent de couplage non-volatil étant une bis-oxazolidine qui répond à l'une des formules (VIII) et (IX) suivantes : 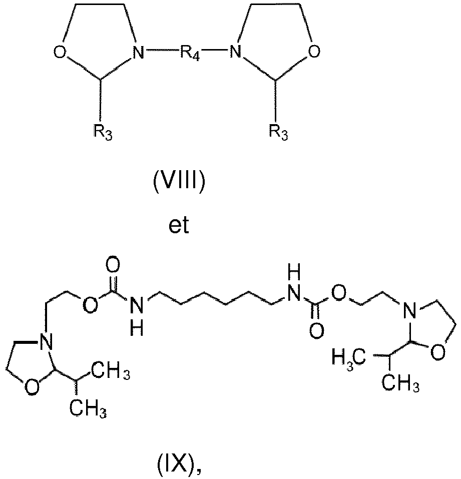 dans lesquelles
- R₃ représente un atome d'hydrogène, un groupe alkyle linéaire ou ramifié ou un groupe aromatique,
- et R₄ représente un groupe alkyle linéaire ou ramifié, un groupe aromatique, un groupe polyester, un groupe polyéther ou un groupe siloxane.

2. Procédé selon la revendication 1, dans lequel au moins un des R₁ et R₂ représente un groupe -CH₂-furanyle.

3. Procédé selon la revendication 1 ou la revendication 2, dans lequel le composé A diamine répond à la formule (V) suivante : 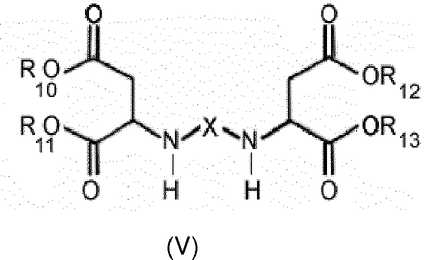 dans laquelle
- X représente un groupe alkyle linéaire, ramifié ou cyclique, ou un groupe aromatique, en option porteur de groupes fonctionnels amine à titre de substituants,
- et les R₁₀ à R₁₃ représentent des groupes, identiques ou différents les uns des autres, choisis, indépendamment, parmi les groupes aliphatiques linéaires, cycliques ou ramifiés.

4. Procédé selon la revendication 3, dans lequel les R₁₀ à R₁₃ représentent, indépendamment, un groupe alkyle linéaire ou ramifié, en position bêta de l'atome d'oxygène appartenant au groupe ester.

5. Procédé selon l'une des revendications 1 à 4, dans lequel le composé B diisocyanate est choisi parmi du 1,6-diisocyanate d'hexaméthylène (HDI), de l'isocyanate de 3-isocyanato-méthyl-3,5,5-triméthyl-cyclohexane (diisocyanate d'isophorone, IPDI), du diisocyanate de diphényl-méthane (MDI) et du 4,4'-diisocyanate de dicyclohexyl-méthane (H₁₂MDI).

6. Procédé selon la revendication 5, dans lequel le composé B est choisi parmi les dimères et trimères des HDI, IPDI, MDI et H₁₂MDI.

7. Procédé selon la revendication 6, dans lequel le composé B est un biuret ou un isocyanurate.

8. Procédé selon la revendication 1, qui comprend en outre le fait de traiter la résine D avec un agent de réticulation de manière à obtenir une résine E de polyurée réticulée.

9. Procédé selon la revendication 2, dans lequel au moins un des R₁ et R₂ représente un groupe alkyle porteur d'au moins un substituant cyclique choisi parmi les cycles furane, pyrrole, thiophène et cyclopentadiène, et l'agent de réticulation est un dérivé de bis-maléimide répondant à la formule (XI) suivante : 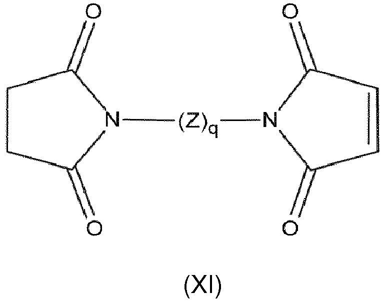 dans laquelle Z représente un groupe alkyle linéaire ou ramifié ou un groupe aromatique, dont chaque occurrence peut, en option, porter un ou des substituant(s), et l'indice q est un nombre de valeur comprise entre 2 et 20, ce qui donne une résine F de polyurée.

10. Procédé selon les revendications 2 et 9, dans lequel au moins un des R₁ et R₂ représente un groupe alkyle porteur d'au moins un cycle furane à titre de substituant.

11. Procédé selon l'une des revendications précédentes, qui comprend en outre le fait d'ajouter un agent ignifugeant à l'une des résines D, E, E1 et F.

12. Procédé selon la revendication 11, dans lequel l'agent ignifugeant est choisi parmi des composés minéraux nanostructurés.

13. Procédé selon la revendication 11, dans lequel le composé du type agent ignifugeant est un phosphonate aromatique ou phosphonate d'alkyle répondant à la formule (XII) suivante : 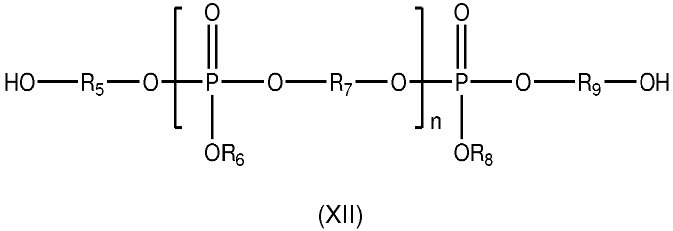 dans laquelle les R₅ à R₉ peuvent représenter, indépendamment, un atome d'hydrogène, un groupe alkyle linéaire ou ramifié ou un groupe aromatique, et l'indice n est un nombre valant de 1 à 10.

14. Résine de polyurée qui peut être préparée conformément à l'une des revendications précédentes.

15. Matériau composite comprenant une résine de polyurée conforme à la revendication 14, et une charge minérale choisie parmi les fibres de basalte, fibres de verre et fibres de carbone, ainsi que leurs mélanges.

16. Matériau composite conforme à la revendication 15, qui comprend une résine de polyurée préparée conformément à un procédé selon la revendication 9.

17. Procédé de préparation d'un matériau composite conforme à la revendication 16, qui comprend le fait d'ajouter la charge à la résine de polyurée ou d'ajouter la résine de polyurée à la charge, au cours de l'étape de consolidation de ladite résine.

18. Utilisation d'un matériau conforme à la revendication 16 pour produire des articles manufacturés.

19. Utilisation d'un matériau conforme à la revendication 17 pour manufacturer des articles.

20. Utilisation conforme à la revendication 18 ou la revendication 20, lesdits articles étant des articles destinés au secteur du nautisme.

21. Procédé de recyclage en fin de vie d'un article conforme à la revendication 17, qui comprend le fait de dépolymériser la résine de polyurée.

22. Procédé selon la revendication 6, dans lequel la bis-oxazolidine de formule (VIII) est introduite en une proportion représentant 10 % à 20 % du poids de la diamine A.

23. Procédé selon la revendication 6, dans lequel
- l'agent de couplage non-volatil, qui est une bis-oxazolidine de formule (VIII), assure une substitution de la diamine A en une proportion supérieure à 50 %,
- et la réticulation est menée à son terme par un traitement à la vapeur d'eau.
